# EUROPEAN PATENT APPLICATION

(11) **EP 2 133 627 A2**
(43) Date of publication of application: **16.12.2009**
(21) Application number: 09162482.5
(22) Date of filing: 11.06.2009
(51) Int. Cl.: F23J 15/06, F23J 13/02

(54) **Device for recovery of the fume heat and discharge of combustion fumes for a boiler**

(30) Priority: 12.06.2008 IT BG20080036
(71) Applicant: Groppalli S.r.l., 29010 Gragnano Trebbiense (PC) (IT)
(72) Inventor: GROPPALLI, Luciano, I-29070, Agazzano (PC) (IT)
(74) Representative: Giavarini, Francesco

(57) **Abstract**

The present invention relates to a device for recovery of fume heat and discharge of the combustion fumes for a boiler (2) normally used in the domestic or industrial sectors. The invention likewise regards a heating assembly comprising a boiler and a device (1) for recovery of fume heat and discharge of fumes according to the invention, connected to said boiler. The device according to the invention comprises at least one first tubular element (10), which may be traversed by the fumes generated in a boiler. Said first tubular element comprises a fume-inlet section (11) and a fume-discharge section (12). The device likewise comprises heat-exchanger means (3) housed within the first tubular element for transferring at least part of the thermal energy of the fumes to water at a lower temperature circulating within the heat-exchanger means. The device according to the invention comprises intake means (5) operatively located in the proximity of the fume-discharge section for drawing the fumes into the first tubular element through the fume-inlet section.

## Description

The present invention relates to a device for recovery of the fume heat and discharge of combustion fumes for a boiler normally used in the domestic or industrial sectors. The invention likewise regards a heating assembly comprising a boiler and a device for recovery of fume heat and discharge of fumes according to the invention connected to said boiler.

As is known, boilers are thermal apparatuses traditionally used for heating water that is to be introduced into a heating circuit or else to be used for sanitary purposes for the personal requirements of users. Boilers traditionally comprise a combustion chamber, housed in the proximity of which is a heat exchanger, referred to as primary heat exchanger, in order to provide for heating of water. The fumes produced following upon combustion possess, as is known, a high thermal energy, which can advantageously be recovered in order to pre-heat the water entering the primary heat exchanger. This enables limitation of the amount of fuel consumed in so far as the thermal jump required becomes smaller given the same final temperature required for the water leaving the boiler.

In order to recover said thermal energy, devices are traditionally used for recovery of fume heat, which are at times also referred to as "economizers". They usually comprise heat exchangers (also referred to as secondary heat exchangers), located in most cases inside the boiler between the combustion chamber and a discharge mouth, at which pipes are inserted that convey the fumes into the atmosphere.

An example of boiler equipped with a secondary heat exchanger is described in the patent application No. EP 0945688. In particular, in this technical solution, which is similar to many others of the sector, the secondary heat exchanger is constituted by a bank of tubes housed in a container inside the boiler casing. The tubes are internally traversed by water and are externally lapped by the combustion fumes conveyed within the container by means of a fan. Through a convective-conductive heat exchange, the thermal energy of the flue gas is transferred from the flue gas to the water. In order to favour this heat exchange, the solution illustrated envisages the use of a partition wall, which, by separating the inlet of the flue gases from the outlet, enables them to follow a predefined path.

The solution just referred to, like many other similar ones (see, for instance, the patent application No. EP 1243866) present certain limits linked in particular to the modalities of construction and assembly of the heat exchangers. Current secondary heat exchangers are rather bulky and need for their positioning appropriate housings inside the boiler. The design and definition of the arrangement of the components of the boiler are hence markedly affected by the type of heat exchanger used and frequently entail long and laborious preliminary studies.

In more recent technical solutions, the thermal energy of the flue gases is recovered through heat exchangers that are positioned in the flue of the boiler. With reference to Figure 1, the patent application No. WO 2006/059215, for example, describes a device (100) for discharge of fumes of a domestic boiler, said device being provided with a tubular element, housed in which are heat-exchanger means (105) for transferring the thermal energy of the flue gases to the circuit for the water that is to enter the primary heat exchanger of the boiler. From the constructional standpoint, the device in question is connected to a boiler (150) through a flange adapter (130), which also configures a system for discharge of the condensate that forms within the tubular elements. The heat-exchanger means (105) are basically formed by a heat-exchange tube, defined within which are two cavities designed to be traversed in opposite directions by water to be heated.

Albeit relatively effective from the practical standpoint, the solution in question revealed various drawbacks. It has been seen, in fact, that the efficiency of the heat exchange enabled by the heat-exchanger means is rather limited in part on account of the configuration of the heat-exchange elements and in part on account of the conditions of outflow of the fumes within the tubular discharge element. The current configuration of the heat-exchanger means limits the efficiency of the conductive heat exchange between the metal surface of the heat-exchange elements and the water circulating therein. More precisely, it has been noted that the current configuration of the heat-exchanger elements enables effective heating of only rather modest amounts of water.

The conditions of outflow of the fumes within the discharge tube involve, instead, the convective heat exchange between the flue gases and the heat-exchange elements themselves. Said flue gases are currently forced within the discharge tube by a fan located within the boiler. It has been noted that in many cases the action of the fan combined with the high temperature of the combustion fumes determines an excessively high rate of outlet of the flue gases, which renders insufficient the time useful for the convective exchange, consequently limiting the efficiency of said heat exchange.

Another drawback of the preceding solution is encountered in the system of connection of the device to the boiler that envisages a flange adapter, which, as already mentioned, configures a system for discharge of the condensate that forms within the device following upon heat exchange. A connection of this sort has proven somewhat reductive as regards the operations of installation in so far as it increases markedly the encumbrance of the boiler-discharge device ensemble. In other words, the adapter limits the functional versatility of the device, creating a constraint, in terms of height, to the number of possible installations.

On the basis of the considerations made so far, there emerges the need to have available new devices for recovery of fume heat and discharge of fumes that validly replace traditional devices used for the same function. Consequently, the primary purpose of what forms the subject of the present invention is to provide a device for recovery of fume heat and discharge of fumes that will enable the limits referred to above to be overcome.

In the framework of this task, a purpose of the present invention is to provide a device for recovery of fume heat and discharge of fumes that will enable simplification of the design, as well as reduction of the encumbrance of the boilers to which the device itself can be applied.

Another purpose of the present invention is to provide a device that will enable a more effective recovery of fume heat as compared to what was possible using traditional devices.

Yet another purpose of the present invention is to provide a device that is obtained using a relatively contained number of components that can be easily assembled together.

A further purpose of the present invention is to provide a device for recovery of fume heat and discharge of fumes, the configuration of which bestows thereon a high functional versatility above all in relation to the mode of connection to a boiler.

Not the least important purpose of what forms the subject of the present invention is to provide a device for recovery of fume heat and discharge of fumes of a boiler that is highly reliable and relatively easy to produce at competitive costs.

The above task, as well as the above and other purposes that will emerge more clearly in the course of the ensuing description, are achieved through a device for recovery of fume heat and discharge of fumes, which is connectable to a boiler and comprises a first tubular element, which may be traversed by combustion fumes of a boiler. Said first tubular element comprises a fume-inlet section and a fume-discharge section opposite to the fume-inlet section. The device moreover comprises heat-exchanger means housed within the first tubular element for transferring at least part of the thermal energy of the fumes to the water at a lower temperature circulating within said heat-exchanger means. The device according to the invention is **characterized in that** it comprises means for intake of the fumes operatively located in the proximity of the fume-discharge section for sucking said fumes in the first tubular element through the fume-inlet section.

The use of intake means set operatively on the outside of a boiler advantageously enables simplification of the internal design of the boiler itself, to which the device for recovery of fume heat and discharge of fumes can be connected. It has been noted, in fact, that the possibility of eliminating the internal fan, deriving precisely from the external intake, leads to a reduction of the encumbrance in height of some tens of centimetres given the same layout of the other significant components of the boiler. This obviously contributes to rendering the boiler extremely versatile in so far as it increases the number of possible installations thereof.

Further characteristics and advantages of the invention will emerge more clearly from the description of preferred, but non-exclusive, examples of embodiments of the device for recovery of fume heat according to the invention illustrated by way of example in the annexed drawings, wherein:

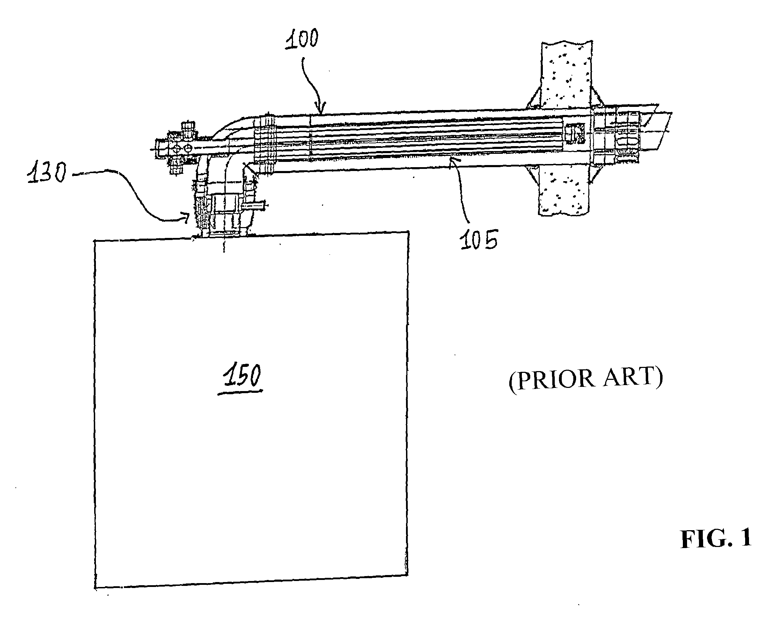

- Figure 1 is a schematic view regarding a boiler provided with a device for recovery of fume heat and discharge of fumes of a traditional type;
- Figure 2 is a schematic view regarding a boiler comprising a device for recovery of fume heat and discharge of fumes according to the present invention;
- Figure 3 is a perspective view regarding a first embodiment of the device for recovery of fume heat and discharge of fumes according to the invention;
- Figure 4 is a plan view of the device of Figure 3 without some components;
- Figure 5 is a cross-sectional view according to the line V-V of Figure 4;
- Figure 6 is a cutaway view, according to a plane of longitudinal section, of the device of Figure 3 without some components;
- Figure 7 is a cross-sectional view according to the line VII-VII of Figure 4; and
- Figure 8 is a cross-sectional view according to the line VIII-VIII of Figure 4.

With reference to the figures listed above, the device 1 for recovery of fume heat and discharge of fumes according to the invention comprises at least one first tubular element 10, which is susceptible of being traversed by fumes generated in the combustion chamber of a boiler 2. Said first tubular element 10 has a fume-inlet section 11 and a fume-discharge section 12, substantially opposite to the fume-inlet section 11. The device 1 likewise comprises heat-exchanger means housed within the first tubular element 10. Said heat-exchanger means are prearranged for transferring thermal energy from the fumes, once these traverse the first tubular element 10, to the water to be heated, circulating in the heat-exchanger means themselves. The water circulating in the heat-exchanger means, at a temperature lower than that of the combustion fumes, can advantageously be sent to the primary heat exchanger of the boiler 2 in order to improve the efficiency of the boiler itself. Alternatively, the water leaving the heat-exchanger means can be directly used for heating or for sanitary purposes.

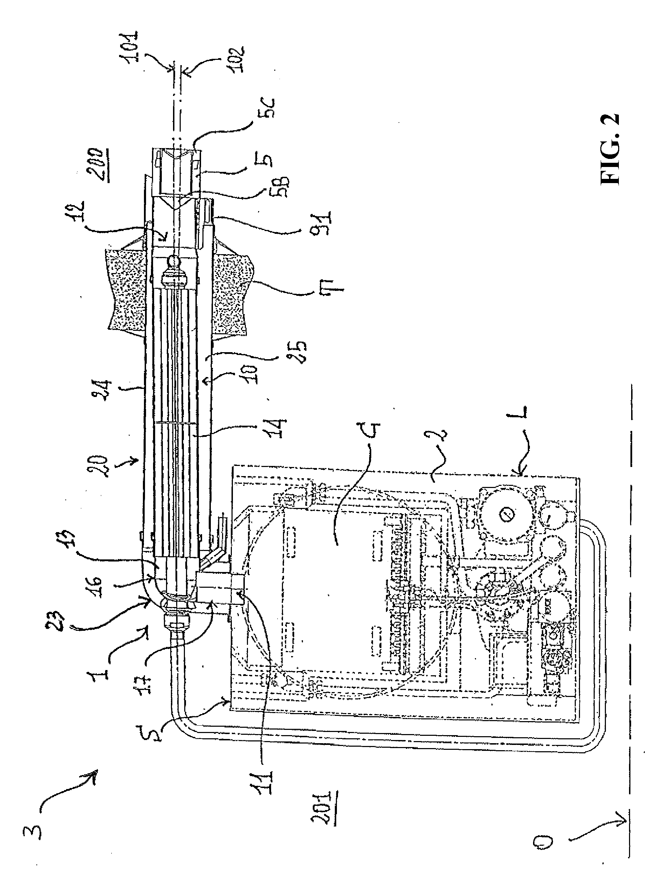

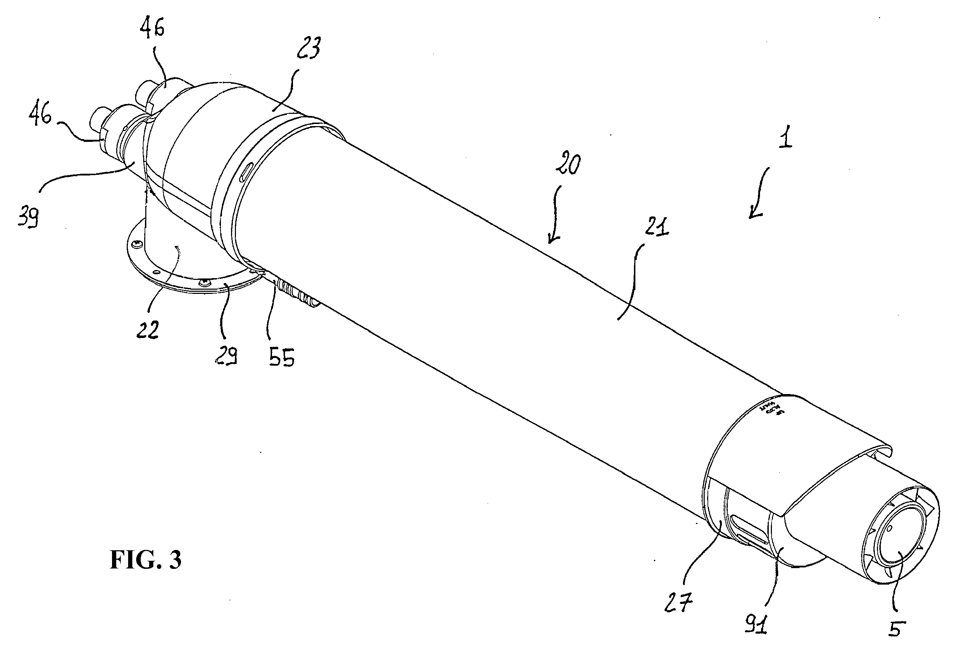

The device 1 according to the invention (see Figures 2 and 3) is **characterized in that** it comprises intake means 5 operatively located in a position corresponding to the fume-discharge section 12 for sucking the fumes of the boiler 2 in the first tubular element 10 through the fume-inlet section 11. The intake means 5 hence have the purpose of aspiring the fumes of the boiler 2, preferably from the fluid-tight chamber thereof, into the first tubular element 10 to enable, on the one hand, controlled discharge of fumes into the atmosphere and, on the other, simultaneous recovery of the fume heat as a result of the heat-exchanger means.

According to a preferred embodiment of the invention, the intake means 5 comprise an adjustable-speed aspirator in order to increase the efficiency of the heat exchange. The use of an adjustable-speed aspirator enables in fact regulation of the flow of the fumes within the first tubular element 10, in practice modulating the rate thereof. This means in effect controlling the time variable that notoriously affects the heat exchange and in particular the convective part thereof that occurs between the fumes and the walls of the heat-exchanger means. This is particularly advantageous, above all in the case of relatively contained temperatures of the combustion fumes. In this case, in fact, the possibility of prolonging the time of heat exchange has favourable repercussions on the heating of the water circulating in the heat-exchanger means.

Figure 2 is a view of the device 1 for recovery of fume heat and discharge of fumes according to the invention, connected to a boiler 2. As illustrated the intake means 5 comprise an aspirator provided with an intake section 5B in communication with the fume-discharge section 12 of the first tubular element 10 and a with delivery section 5C in communication with the atmosphere. The device 1 for recovery of fume heat and discharge of fumes can advantageously develop so that the aspirator 5 is located in an environment 200 external to the boiler room 201, in which the boiler 2 to which the device itself is connected is located. In Figure 2, the division of the two environments is represented schematically by a wall T represented as being made of masonry purely for purposes of illustration.

The device 1 for recovery of fume heat and discharge of fumes according to the invention preferably comprises a second tubular element 20, operatively located within which is the first tubular element 10 in such a way as to generate an annular space 25 for passage of air that is to go to the boiler 2 and that can be used as comburent in the combustion chamber of the boiler itself. The two tubular elements 10 and 20 are made preferably of metal material, for example aluminium. Each of the two tubular elements 10 and 20 comprises a longitudinal portion 14, 24 and a curved portion 13, 23 connected to one end of the corresponding longitudinal portion 14, 24. The use of a curved portion 13, 23 for each tubular element 10, 20 advantageously enables connection of the device to a boiler 2 and at the same time orientation thereof in space according to the requirements of use in order to facilitate location of the boiler 2 within the boiler room 201.

The longitudinal portion 14 of the first tubular element 10 is configured for housing the heat-exchanger means and is located inside the longitudinal portion 24 of the second tubular element 20. In greater detail, said longitudinal portion 14 is housed so that its longitudinal axis 101 is inclined with respect to the longitudinal axis 102 of the longitudinal portion 24 of the second tubular element 20. This arrangement has the purpose of enabling the flow of the condensate (which forms as a result of the heat exchange) towards the curved portion 13 of the first tubular element 10, located in the proximity of which are discharge means for the condensate described hereinafter.

The figure illustrates a device 1 for recovery of fume heat and discharge of fumes according to the invention in a substantially horizontal configuration of installation such that the longitudinal portion 24 of the second tubular element 20 is substantially parallel to a horizontal plane of reference O. The curved portion 23 of the second tubular element 20 is connected to a top surface S of the boiler 2 substantially parallel to the plane of reference O. Said connection is made through a flanged rim 29 defined at one free end of the curved portion 23, substantially opposite to the end connected to the corresponding longitudinal portion 24 of the second element 20.

From the practical standpoint, said mode of connection enables mechanical fixing of the entire device 1 to the boiler 2, but must be considered in any case merely as a possible, and consequently non-exclusive, technical solution. In fact, in an alternative solution (not illustrated), the device 1 could also be connected to the boiler 2 through a flanged rim made on a portion of the first tubular element 10 in a position close to the fume-inlet section 11.

The curved portion 13 of the first tubular element 10 comprises a first part 16, which connects to one end of the longitudinal portion 14, and a second part 17, which defines the fume-inlet section 11. In particular, said second part 17 can extend beyond the flanged connection rim 29 from the curved portion 22 of the second tubular element 20. In this way, once the device 1 is connected to the boiler 2, the fume-inlet section 11 is located in a position markedly internal to the casing of the boiler 2 and possibly inside the combustion chamber (designated by C in Figure 2) thereof.

Obviously falling within the scope of the present invention is the possibility of installing the device 1 according to other modalities different from the one illustrated. The device 1 of Figure 2, for example, could also be installed according to a "vertical" configuration such that the flanged rim 29 is to be operatively connected to a lateral surface L of the boiler 2. In this configuration, the axis 102 of the longitudinal portion 24 of the second element 20 will be substantially orthogonal to the horizontal plane of reference O. In this hypothesis, the axes 101, 102 of the longitudinal portions 14, 24 of the two tubular elements 10, 20 could also coincide in so far as the flow of the condensate would be obtained by gravity as far as the condensate-discharge means.

According to a possible embodiment (not illustrated) of the device for recovery of fume heat and discharge of fumes, the two tubular elements 10 and 20 are without the curved portions 13, 23 illustrated in Figure 2, i.e., made in the form of two tubes substantially inserted inside one another. Said configuration enables connection of the device 1 to one of the surfaces of the boiler 2 in such a way, for example, that the longitudinal axis 102 of the second element 20 is orthogonal to the surface, whether this be the top surface S or the lateral surface L.

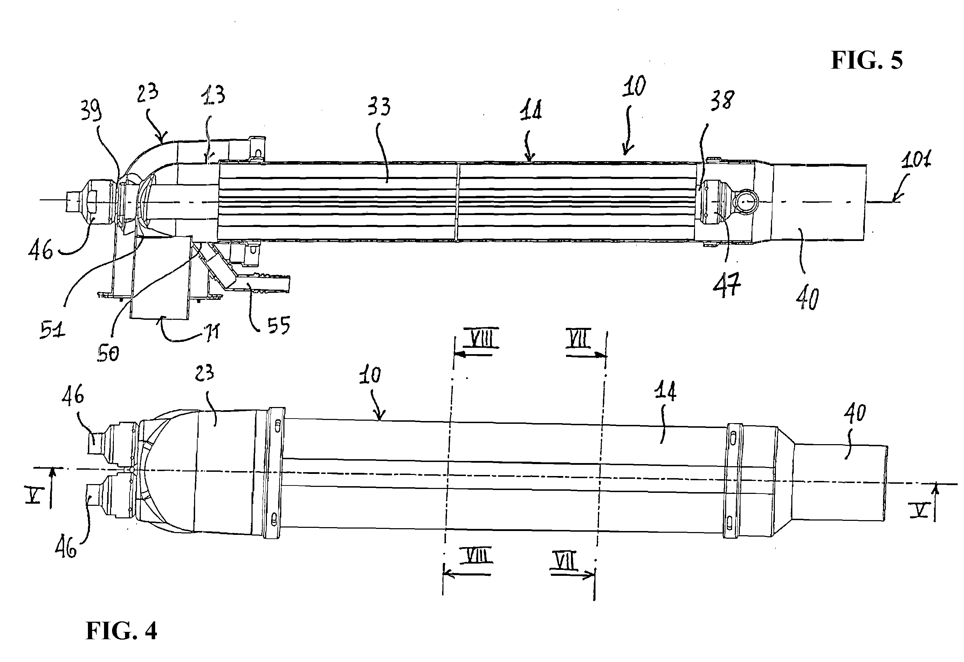

Figures 3 and 4 are, respectively, a perspective view and a plan view of the device 1 for recovery of fume heat and discharge of fumes illustrated in Figure 2. In greater detail, in Figure 4 the device 1 is deprived, for purely descriptive purposes, of the intake means 5, and the second tubular element 20 is without the corresponding longitudinal portion 24 illustrated in Figure 2. Figure 5 is a cross-sectional view according to the line V-V of Figure 4 and illustrates the arrangement of the heat-exchanger means prearranged within the first tubular element 10.

The heat-exchanger means, according to the invention, comprise a plurality of heat-exchange elements 33, which are connected together in such a way as to configure a hydraulic circuit within the first tubular element 10. In detail, in said circuit water is made to circulate, which is preferably, but non-exclusively, to be further heated by the boiler 2 to which the device 1 is connected. The hydraulic circuit according to the invention is configured so that the heat exchange between the fumes and the water occurs partially in conditions of equicurrent, i.e., when the direction of the water is concordant to that of the fumes, and partially in conditions of countercurrent, i.e., when the direction of flow of the water is opposite to that of the combustion fumes. This technical solution enables an increase in the efficiency of the heat exchange, leading, for example, to an energy saving of the boiler 2 in the case where this is fed with the water heated by the heat-exchanger means.

According to a preferred embodiment of the invention, the hydraulic circuit comprises at least one pair of elongated heat-exchange elements 33, which are hollow and are set at least partially in a longitudinal direction on the outer surface. Said elements 33 are located within the longitudinal portion 14 of the first tubular element 10 so that the longitudinal axis 101 of said portion is parallel to that of the axes of the single elements 33. With reference to Figure 5, for example, it may be noted that each heat-exchange element 33 is operatively set so that one first terminal part thereof 38 is located within the first tubular element 10, whilst a second terminal part 39 opposite to the first 38 comes out of the first tubular element 10 and out of the second tubular element 20, traversing the corresponding curved portion 13, 23. In a position corresponding to the second terminal part 39, each heat-exchange element 33 is provided with a hydraulic connection 46 that enables the elements 33 to be inserted in a hydraulic circuit, as may, for example, be that for supply of the boiler 2, as appears clearly from the representation of Figure 2.

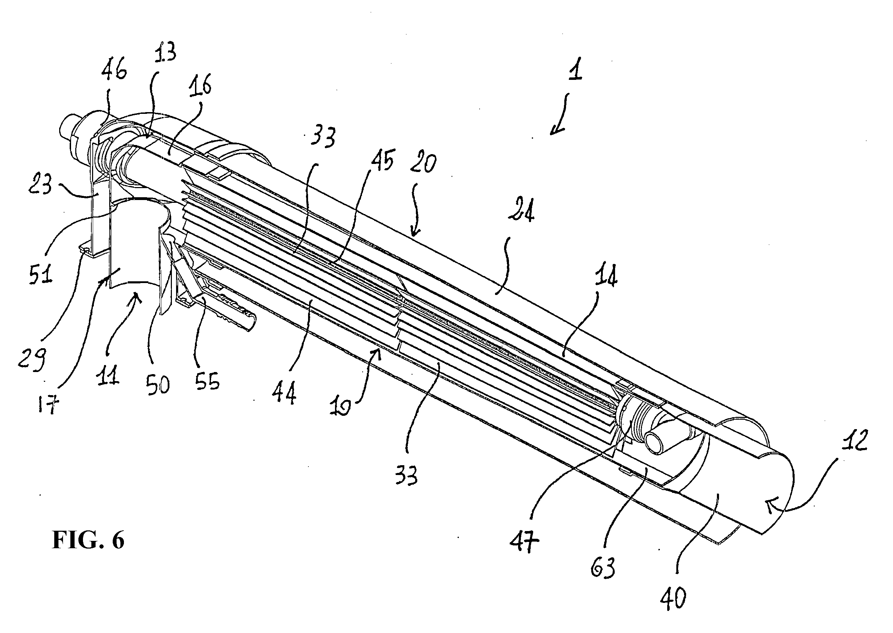

The hydraulic circuit comprises a flow-reversal connector 47, which connects the corresponding first terminal portions 38 of the heat-exchange elements 33, which, as indicated, are internal to the first tubular element 10. Said radiusing 47 has the function of enabling a reversal of the direction of the flow of the water during passage thereof from one element to the other. In this way, the mode of heat exchange is varied, becoming from equicurrent to countercurrent. In this connection, the flow-reversal connector 47 has a substantially U-shaped configuration, as may be appreciated from the cutaway view in Figure 6, which shows in any case only one half of said radiusing 47.

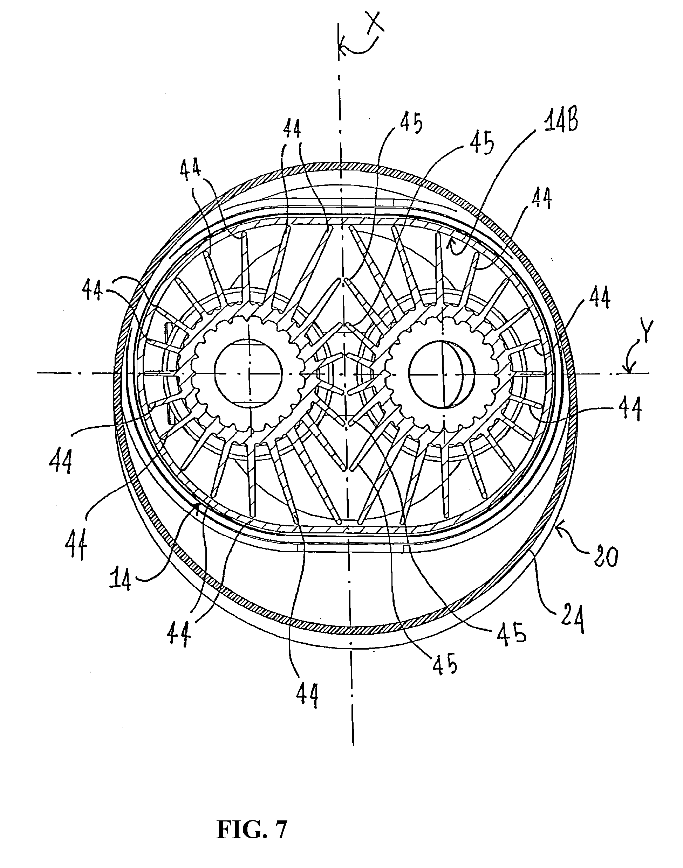

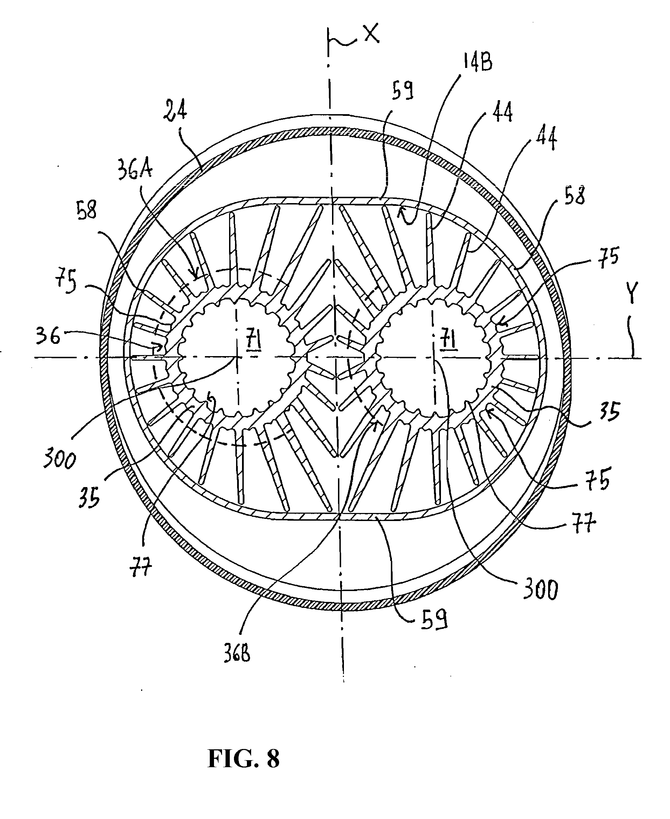

Figures 7 and 8 are cross-sectional views, respectively, according to the line VII-VII and the line VIII-VIII of Figure 4 and show in detail the cross section of the longitudinal portion 14 of the first tubular element 10 and the cross section of the two heat-exchange elements 33 housed therein. As is evident, the first tubular element 10 has an ellipsoidal cross section. The term "ellipsoidal" is intended to indicate a generic geometrical shape that "recalls" the shape of an ellipse (not necessarily coinciding with the definition of ellipse itself) and that is symmetrical with respect to two mutually orthogonal axes of symmetry X, Y. In detail, the cross section of the longitudinal portion 14 of the first element 10 is made up of two semicircular portions 58, which are symmetrical with respect to a first axis X and connected together through two rectilinear portions 59, which are opposed with respect to a second axis Y orthogonal to the first X.

Each heat-exchange element 33 is formed by a tubular body 35 that defines a longitudinal cavity 71 for the passage of water. Each cavity 71 is delimited by an internal surface of a cylindrical shape, which has a plurality of radial projections 77 that develop preferably throughout the longitudinal development of the cavity 71. The two heat-exchange elements 33 are located within the first tubular element 10 so that the longitudinal axes 300 of the cavities 71 are aligned along the second axis of symmetry Y of the cross section, occupying at the same time a position symmetrical with respect to the first axis of symmetry X of the cross section itself.

The tubular body 35 comprises a plurality of longitudinal fins 44, 45 that develop from its outer surface 36 in different directions. In greater detail, in the solution illustrated, each tubular body 35 comprises a series of first longitudinal fins 44 that extend symmetrically with respect to the aforesaid second axis of symmetry Y from a first portion 36A (indicated in Figure 8 with a dashed line concentric to the portion in question) of the outer surface 36. In greater detail, said first fins 44 extend so as to occupy a position adjacent to the internal surface 14B of the longitudinal portion 14 of the first tubular element 10 and so as to be specular, with respect to the first axis X, to corresponding fins of the other element.

With reference once again to Figures 7 and 8, each tubular body 35 moreover comprises a series of second longitudinal fins 45 that extend symmetrically from a second portion 36B (indicated in Figure 8 with a dashed line concentric to the portion in question) of the outer surface 36 with respect to the aforesaid second axis of symmetry Y. In detail, said second fins 45, of one of the two tubular bodies 35, extend so as to occupy a position specular with respect to corresponding second fins 45, of the other tubular body 35, with respect to the aforesaid first axis of symmetry X.

With reference to Figure 8, according to a preferred embodiment, the outer surface 36 of each tubular body 35 moreover comprises a plurality of further radial projections 75, each of which emerges between two mutually adjacent longitudinal fins 44, 45. Said further radial projections preferably develop throughout the longitudinal extension of the tubular bodies 35.

The geometrical configuration of the heat-exchange elements, in particular the structure of the longitudinal fins 44, 45 and the presence of the radial projections 77, 75 enable, by virtue of the considerable surface available, a sensible improvement of the heat exchange between the combustion fumes and the water.

With reference to the cutaway view of Figure 6, at an end part 63 of the longitudinal portion 14 of the first tubular element 10 an adapter 40 is provided, which defines the fume-discharge section 12 of the first tubular element 10. Installed in a position corresponding to said section 12 are the intake means 5 of the device 1 according to the invention. Consequently, the fume-discharge section 12 must be structured in the way most conformable to favour installation of said intake means. Consequently, it follows that the adapter 40 may advantageously be used as radiusing element between the cross section of the longitudinal portion 14 of the first tubular element 10 and the fume-discharge section 12, this being presumably different in geometry and/or dimensions. In this connection, from the cutaway view of Figure 6 it may be noted that the adapter 40 is configured so as to adapt, upstream, to the elliptical cross section of the longitudinal stretch 14 defining, downstream, a substantially circular discharge section 12.

With reference once again to Figures 2 and 3, the device 1 according to the invention preferably comprises a supporting structure 91, which is connected to an outer end 27 of the longitudinal portion 21 of the second tubular element 20 opposite to the end connected to the corresponding curved portion 23. Said structure 91 is substantially ring-shaped and supports the first tubular element 10 in a position corresponding to the adapter 40. Said structure 91 is advantageously configured so as to provide a support also for the intake means 5, i.e., so as to install the latter in the most suitable operative position.

With reference to Figures 5 and 6, the device 1 according to the invention advantageously comprises means for discharge of the condensate that forms within the first tubular element 10 following upon the heat exchange between the fumes and the water circulating in the heat-exchanger means. Said condensate-discharge means preferably comprise an annular lip 51, which defines a path of collection of the condensate towards a discharge mouth 50 made on the curved portion 13 of the first tubular element 10. This technical solution, unlike the traditional solutions, solves very effectively and without additional encumbrance the problem of elimination of condensate. In particular, it is very advantageous to provide the annular lip 51 integrally with the curved portion 13 of the first tubular element 10, for example via stamping or casting, according also to the materials used for production of the first tubular element 10.

Applied in a position corresponding to the discharge mouth 50 is a discharge channel 55, which can advantageously convey the condensate out of the device 1 for recovery of fume heat and discharge of fumes. Said discharge channel 55 will advantageously be provided with siphon means that prevent exit of hot fumes from the device, enabling only discharge of the condensate when this exceeds a pre-set amount.

As was indicated for the adapter 40, also the curved portion 13 of the first tubular element 10 must be structured in such a way as to be connectable downstream of the longitudinal portion 14, defining at the same time, upstream, the fume-inlet section 11. This may be defined in the way most conformable, for example, to the internal connection with the combustion chamber of the boiler. In the solution illustrated, the first part 16 of the curved portion 13 is hence configured for connection, downstream, to the longitudinal portion 14 of the first tubular element 10, whilst the second part 17 defines, upstream, a substantially circular fume-inlet section 11.

The present invention also relates to a heating assembly comprising a boiler 2 and a device 1 for recovery of fume heat and discharge of fumes according to the present invention. It has been seen that a heating assembly 3 thus conceived presents multiple advantages, above all in terms of overall thermal efficiency and in terms of reduction of the volumes of encumbrance associated to the boiler 2.

The intake means 5 of the device 1 for recovery of fume heat and discharge of fumes enable a controlled intake of the discharged fumes produced by the boiler 2, in effect rendering use of the fans normally located within the boiler altogether unnecessary. This consequently leads to the possibility of designing and providing a boiler that is structurally simpler and more compact than the ones traditionally used. Common practice has in fact shown how elimination of the volumetric encumbrance linked to the presence of the fan can advantageously result in a possible overall reduction in the height of the boiler of the order of some tens of centimetres. Consequently, the number of possible installations of the boiler itself increases.

As has been pointed out above, the configuration of the device 1 for recovery of fume heat and discharge of fumes enables increase in the thermal efficiency of the boiler principally on account of the possibility of heating the water that is to go to the primary heat exchanger of the boiler through recovery of fume heat. At the same time, it should, however, be emphasized how the configuration of the device 1 for recovery of fume heat and discharge of fumes will enable also an advantageous increase in the temperature of the comburent air that is to reach the combustion chamber of the boiler. With reference for example to Figure 2, during normal operation of the boiler 2 the air that traverses the annular space 25 (between the tubular elements 10 and 20 of the device 1) laps the outer surface of the first tubular element 10, being in this way heated. This aspect obviously contributes to a further increase in the efficiency of the boiler 2.

Another advantageous aspect is encountered in the fact that the device for recovery of fume heat and discharge of fumes can advantageously be installed on any type of boiler, also in that type of boiler commonly referred to as "condensation boiler".

According to a preferred embodiment of the invention, the heating assembly 3 advantageously comprises control means that regulate operation of the intake means 5 of the device 1 as a function of the variation of one or more state variables characteristic of the discharge fumes generated within the boiler 2. To enable this regulation the control means could be in communication with one or more sensor means, each of which has the purpose of detecting a physical variable of the combustion fumes (for example, the temperature). Said means sensor could be located, for example, in a position close to the fume-inlet section 11 in the first tubular element 10 of the device 1 and could be set on the device itself or alternatively, on parts of the boiler 2 close to said fume-inlet section 11. The control means could advantageously be integrated in the control unit governing operation of the boiler 2.

In general, the presence of means for control of the intake means advantageously enables modulation of the heat exchange as a function, for example, of the temperature of the gases at outlet. If this is, for example, relatively low, then the intake rate can be reduced so as to prolong the convective heat exchange by acting basically on the time variable. Instead, for higher temperatures of the fumes the intake rate could increase in so far as the convective heat exchange takes place starting from a higher energy level of the fumes.

The technical solutions adopted for the device for discharge of fumes enable the pre-set tasks and purposes to be fully accomplished. In particular, the device for recovery of fume heat and discharge of the combustion fumes is obtained using a small number of components, which can be easily assembled together. The location of the device and the simultaneous use of intake means external to the boiler enable a simpler design and a reduction in the encumbrance connected thereto. The use of intake means with adjustable intake rate moreover enables modulation of the heat exchange of the corresponding means, thus improving the efficiency thereof.

In practice, the materials used, as well as the contingent dimensions and shapes, may be any whatsoever according to the requirements and the state of the art.

## Claims

1. A device (1) for recovery of fume heat and discharge of fumes, which is connectable to a boiler (2) and comprises at least one first tubular element (10), susceptible to be traversed by said fumes produced in said boiler (2), said first tubular element (10) comprising a fume-inlet section (11) and a fume-discharge section (12) opposite to said fume-inlet section (11), said device (1) comprising heat-exchanger means (3) housed within said first tubular element (10) for transferring at least part of the thermal energy of said fumes to water at a lower temperature circulating within said heat-exchanger means, said device (1) being **characterized in that** it comprises intake means (5) operatively located in the proximity of said fume-discharge section (12) for sucking said fumes in said first tubular element (10) through said fume-inlet section (11).

2. The device (1) according to Claim 1, **characterized in that** said intake means (5) comprise an aspirator, the speed of which is adjustable as a function of one or more state variables characteristic of said fumes.

3. The device (1) according to Claim 1 or Claim 2, **characterized in that** it comprises a second tubular element (20), housed within which is said first tubular element (10) in such a way as to generate an annular space (25) for the passage of air, said first tubular element (10) comprising at least one longitudinal portion (14) housed in a corresponding longitudinal portion (24) of said second tubular element (20).

4. The device (1) according to one or more of Claims 1 to 3, wherein said heat-exchanger means comprise a plurality of heat-exchange elements (33) connected together so as to configure a hydraulic circuit within said first tubular element (10) such that the transfer of said at least part of the thermal energy occurs partially in conditions of equicurrent and partially in conditions of countercurrent.

5. The device (1) according to Claim 3 or Claim 4, wherein said first tubular element (10) comprises a curved portion (13) housed within a curved portion (23) of said second tubular element (20), each of said curved portions (13, 23) being connected on one side to a longitudinal portion (14, 24) of the corresponding tubular element (10, 20).

6. The device (1) according to Claim 4 or Claim 5, wherein said hydraulic circuit comprises a pair of elongated heat-exchange elements (33), which are hollow for being traversed by said water, said elongated elements (33) being set partially within a longitudinal portion (14) of the first tubular element (10) so that a first terminal part (38) thereof is located operatively within said first tubular element (10), and a second terminal part (39), opposite to the first (38), comes out on the outside of said first tubular element (10) and said second tubular element (20), said heat-exchanger means comprising a flow-reversal connector (47), which connects together said elongated elements (33) each at the respective first terminal part (38).

7. The device (1) according to Claim 6, wherein said longitudinal portion (14) of said first tubular element (10) has an ellipsoidal cross section made up of a pair of semicircular portions (58), which are symmetrical with respect to a first axis of symmetry (X) and connected together through a pair of rectilinear portions (59), which are opposed with respect to a second axis of symmetry (Y) of said cross section, said elongated elements (33) being set inside said first longitudinal portion (14) so that the respective longitudinal axes (300) are set on said second axis of symmetry (Y) and are in a position symmetrical with respect to said first axis of symmetry (X).

8. The device (1) according to Claim 7, wherein each elongated heat-exchange element (33) comprises a tubular body (35) provided with a longitudinal cavity (71), the internal surface of which comprises a plurality of radial projections (77) that develop longitudinally, said tubular body (35) comprising an outer surface (36) provided with a plurality of longitudinal fins (44, 45).

9. The device (1) according to Claim 8, wherein said tubular body (35) comprises a series of first longitudinal fins (44) that extend from a first portion (36A) of said outer surface (36) symmetrically with respect to said second axis of symmetry (Y) and up to a position adjacent to the internal surface (14B) of said longitudinal portion (14) of said first tubular element (10), said elongated elements (33) being operatively located so that said first fins (44) of one of the two elements are specular to corresponding first fins (44) of the other element with respect to said first axis of symmetry (X).

10. The device (1) according to Claim 9, wherein said tubular body (35) comprises a series of second fins (45) that extend from a second portion (36B) of said outer surface (36), different from said first portion (36A), symmetrically with respect to said second axis of symmetry (Y), said second fins (45) of one of said elements (33) extending in such a way as to be specular to corresponding fins of the other element with respect to said first axis of symmetry (X).

11. The device (1) according to one or more of Claims 2 to 9, wherein said first tubular element (10) comprises an adapter (40) connected to an end part (63) of said longitudinal portion (14), said adapter (40) defining said fume-discharge section (12).

12. The device (1) according to Claim 11, wherein a supporting structure (91) is connected to a terminal part (27) of said longitudinal portion (24) of said second tubular element (20), said structure (91) being configured so as to support said first tubular element (10) in a position corresponding to said adapter (40).

13. The device (1) according to one or more of Claims 1 to 12, wherein provided within said curved portion (17) of said first tubular element (10) is an internal annular lip (51) for conveying products of condensate towards a discharge mouth (50) made on the same curved portion (17).

14. A heating assembly (3) comprising a boiler (2) and **characterized in that** it comprises a device (1) for recovery of fume heat and discharge of fumes according to one or more of Claims 1 to 13.

15. A heating assembly (3) according to claim 14, **characterized in that** it comprises control means for regulating operation of said intake means (5) of said device (1) for recovery of fume heat and discharge of fumes.
